# EUROPÄISCHE PATENTANMELDUNG

(11) **EP 1 529 908 A2**
(43) Veröffentlichungstag der Anmeldung: **11.05.2005**
(21) Anmeldenummer: 04026018.4
(22) Anmeldetag: 03.11.2004
(51) Int. Cl.: E05C 5/00, E05B 65/12, B60J 7/185

(54) **Verschluss für Verdecke, Klappen oder dergleichen an Fahrzeugen**

(30) Priorität: 07.11.2003 DE 10352488
(71) Anmelder: ISE Industries GmbH, 51702 Bergneustadt (DE)
(72) Erfinder: Ellenbeck, Günter, 45883 Gelsenkirchen (DE)
(74) Vertreter: Patentanwälte Wenzel & Kalkoff

(57) **Zusammenfassung**

Die Erfindung betrifft einen Verschluß für Verdecke, Klappen oder dergleichen an Fahrzeugen mit einem zwischen einer Öffnungslage und einer Schließlage bewegbaren, schwenkbar gelagerten Fanghaken, einem einerseits an dem Fanghaken und andererseits an dem Steuerungshebel schwenkbar gelagerten Verbindungshebel. Um einen Verschluß bereitzustellen, der aus sehr wenigen Bauteilen auf kleinstem Raum gebildet ist und einen hohen Zuziehweg aufweist, ist vorgesehen, daß an dem um eine am Verschluß ortsfeste Drehachse gelagerten Steuerungshebel zusätzlich ein erstes Ende eines Antriebshebels schwenkbar gelagert ist, wobei das dem ersten Ende gegenüberliegende zweite Ende des Antriebshebels in einer ersten, am Verschluß angeordneten Führung linear verschiebbar gelagert ist, bei dem der Fanghaken an einer zweiten Führung gelagert ist, die derart ausgebildet ist, daß der Fanghaken beim Übergang von der Öffnungslage in die Schließlage im Anschluß an eine lineare Bewegung eine Drehbewegung vollzieht.

## Beschreibung

Die Erfindung betrifft einen Verschluß für Verdecke, Klappen oder dergleichen an Fahrzeugen mit
- einem zwischen einer Öffnungslage und einer Schließlage bewegbaren, schwenkbar gelagerten Fanghaken,
- einem einerseits an dem Fanghaken und andererseits an einem Steuerungshebel schwenkbar gelagerten Verbindungshebel, wobei
- an dem um eine am Verschluß ortsfeste Drehachse gelagerten Steuerungshebel zusätzlich ein erstes Ende eines Antriebshebels schwenkbar gelagert ist, wobei
- das dem ersten Ende gegenüberliegende zweite Ende des Antriebshebels in einer ersten, am Verschluß angeordneten Führung linear verschiebbar gelagert ist.

Derartige Verschlüsse werden bevorzugt an Verdecken von Cabriolets eingesetzt, können jedoch bspw. auch als Verschlüsse für Verdeckkästen oder dergleichen eingesetzt werden. Bei diesen Verschlüssen genügt eine hinreichende Annäherung des Fanghakens an ein Halteelement, bspw. einen Verschlußzapfen einer Schloßeinheit, die im Falle eines Cabriolet-Verdeck am oberen Windschutzscheibenrahmen angeordnet ist, um den Verschluß zu aktivieren, der dann das Verdeck zuzieht und verriegelt. Für die Entriegelung kann die Wirkrichtung des Verschlusses umgekehrt werden, wodurch der Verschluß mit dem Windschutzscheibenrahmen außer Eingriff kommt und somit das Verdeck freigibt.

Die bekannten Ausführungen derartiger Verschlüsse sind außerordentlich aufwendig im Bezug auf die verwendeten Bauteile, so daß deren Herstellung erhebliche Kosten verursachen. Darüber hinaus ist die komplizierte Technik relativ anfällig. Zudem weisen die bekannten Verschlüsse eine relativ große Baugröße auf, um die konstruktiven Anforderungen an die geforderten Zuziehwege zu erfüllen, da diese bei bekannten Verschlüssen proportional zur Baugröße sind.

Der Erfindung liegt demnach die Aufgabe zugrunde, einen Verschluß bereitzustellen, der aus sehr wenigen Bauteilen auf kleinstem Raum gebildet ist und einen hohen Zuziehweg aufweist.

Die Erfindung löst die Aufgabe durch einen Verschluß gemäß Anspruch 1. Vorteilhafte Weiterbildungen der Erfindung sind in den abhängigen Ansprüchen angegeben.

Bei einem Verschluß gemäß der Erfindung erfolgt die Steuerung des Bewegungsablaufs des Fanghakens in der Regel über einen Antriebshebel, der innerhalb einer ersten Führung zwischen einer Anfangsstellung und einer Endstellung verschoben werden kann, die der Öffnungslage bzw. der Schließlage des Fanghakens entsprechen. Bei der Bewegung des vorzugsweise extern angetriebenen Antriebshebels übertragen der Steuerungshebel und der Verbindungshebel die Bewegung auf den Fanghaken.

Erfindungsgemäß ist der Fanghaken des Verschlusses dabei an einer zweiten Führung gelagert. Diese ist derart ausgebildet ist, daß der Fanghaken beim Übergang von der Öffnungslage in die Schließlage im Anschluß an eine lineare Bewegung eine Drehbewegung vollführt. D.h. ausgehend von der Öffnungslage des Fanghakens bewegt sich dieser analog zum Antriebshebel ausschließlich linear in der zweiten Führung. An einem vorbestimmten Punkt des Bewegungsablaufs wird die lineare Bewegung des Antriebshebels dann in eine ausschließliche Drehbewegung des Fanghakens, resultierend aus der Ausgestaltung der Führung und der Lagerung des Fanghakens an der zweiten Führung umgewandelt.

Bei einer vorteilhafterweise schräg angestellten Innenfläche des Fanghakens erfolgt ein Zuziehen eines Verdecks oder einer Klappe bereits bei der linear gerichteten Bewegung des Fanghakens, wenn dieser mit einem Verschlußzapfen zusammenwirkt, der je nach Einsatzzweck des Verschlusses an einem Windschutzscheibenrahmen, einen Gehäuserahmen oder dergleichen angeordnet sein kann. Nach Beendigung der Linearbewegung vollzieht der Fanghaken bis zum Erreichen der Schließstellung eine Drehbewegung, bei der der Verschlußzapfen an den Verschluß herangezogen wird. Aufgrund der bereits bei der Linearbewegung erfolgenden Zuziehbewegung weist der erfindungsgemäße Verschluß trotz der nur geringen Bauhöhe einen erheblich größeren Zuziehweg auf, als vergleichbare Verschlüsse, bei denen die Zuziehbewegung allein aus der Drehbewegung des Fanghakens resultiert.

Zum Antrieb des Verschlusses kann annähernd jede kraftspendende Antriebseinheit Verwendung finden, die in der Lage ist, den Antriebshebel zwischen der Anfangsstellung und der Endstellung zu bewegen, also bspw. Kettenantriebe, Seilzüge, Pneumatikzylinder, elektrisch betriebene Mutter-Spindel-Einheiten oder Elektromotoren. Es kommt lediglich darauf an, daß die von der Antriebseinheit aufgebrachte oder gegebenenfalls auch nur unterstützte Schließbewegung umgekehrt werden kann.

Nach einer vorteilhaften Weiterbildung der Erfindung ist jedoch das zweite Ende des Antriebshebels mit einer Antriebseinheit, insbesondere einem Hydraulikzylinder eines hydraulischen Antriebs verbunden. Die Verwendung eines hydraulischen Antriebs, der vorteilhafter Weise an entsprechenden Anlageflächen an dem Verschluß angeordnet ist, zeichnet sich durch sein hohes Kraftpotential bei einer gleichzeitig nur geringen Geräuschentwicklung aus. Dabei kann bei der direkten Verbindung des Hydraulikzylinders an dem Verschluß auf zusätzliche Kraftübertragungsmittel verzichtet werden, die eine Verteuerung des Verschlusses und eine Erhöhung der Störungsanfälligkeit zur Folge hätten. Die Verwendung eines Hydraulikzylinders gewährleistet somit in besonderem Maße die Funktionssicherheit des Verschlusses.

Gemäß dieser Weiterbildung der Erfindung ist bei einer Verwendung einer hydraulischen Antriebseinheit der Hydraulikzylinder dabei derart mit dem zweiten Ende des Antriebshebels verbunden, daß dieser im wesentlichen zwischen der Anfangsstellung und der Endstellungen in der ersten Führung verschiebbar ist, die der Öffnungslage und der Schließlage des Fanghakens entsprechen.

Nach einer vorteilhaften Weiterbildung der Erfindung sind alle Verschlußteile in einem Gehäuse, das nach einer besonders vorteilhaften Ausgestaltung Anschraublaschen zur Montage aufweist, untergebracht. Die Verwendung eines Gehäuses erlaubt es, den Verschluß als Anbauteil auszuführen, welches an entsprechender Position an einem Verdeck, einer Klappe oder dergleichen angeordnet werden kann. Da das Gehäuse so ausgebildet sein kann, daß sich sämtliche Verschlußteile auch während der Bewegung des Fanghakens aus der Öffnungslage in die Schließlage vollständig innerhalb des Gehäuses befinden, kann auf Anpassungen an den zur Anordnung des Verschlusses vorgesehenen Bauteilen verzichtet werden, so daß die Konstruktions- und Produktionskosten in ergänzender Weise gesenkt werden können.

Die Führung des zweiten Endes des Antriebshebels sowie die Führung des Fanghakens kann grundsätzlich beliebig, bspw. durch mit dem Antriebshebel bzw. mit dem Fanghaken verbundene Bolzen, die in entsprechenden Nuten am Gehäuse angeordnet sind, erfolgen. Nach einer vorteilhaften Weiterbildung der Erfindung sind die Führungen jedoch durch an dem Gehäuse angeordnete Kulissen, insbesondere in Form von angepaßten Langlöchern, gebildet.

Gemäß dieser Ausführungsform der Erfindung kann das Gehäuse für die erste Führung des Antriebshebels eine Kulisse in Form eines Langlochs aufweisen, dessen Enden die Öffnungs- bzw. Schließlage des Fanghakens definieren. Zur Führung des Fanghakens weist der Verschluß gemäß dieser Weiterbildung der Erfindung ebenfalls ein Langloch auf, welches zur Aufnahme eines an dem Fanghaken angeordneten Führungselements ausgebildet ist, wobei das Führungselement und das Langloch so ausgebildet sind, daß sich der Bewegungsablauf des Fanghakens beim Bewegen von der Öffnungslage in die Schließlage so darstellt, daß zuerst eine lineare Bewegung und anschließend eine Drehbewegung des Fanghakens erfolgt.

Die Anordnung von Langlöchern im Gehäuse ermöglicht es, auf zusätzliche Führungsschienen oder dergleichen zu verzichten. Zudem kann durch die Einbringung von Langlöchern eine ergänzende Gewichtsreduzierung erzielt werden, ohne die Stabilität des Verschlusses zu verringern.

Die Ausgestaltung des Gehäuses zur Aufnahme der Verschlußteile ist dabei grundsätzlich frei wählbar. Denkbar ist bspw. die Verwendung von entsprechend ausgebildeten Kunststoffelementen, Metallrahmen oder dergleichen. Nach einer vorteilhaften Weiterbildung der Erfindung ist das Gehäuse jedoch aus zwei im Abstand voneinander angeordneten, miteinander verbundenen Blechteilen gebildet, an denen der Fanghaken und das zweite Ende des Antriebshebels verschiebbar gelagert sind.

Gemäß dieser Weiterbildung der Erfindung werden die Blechteile bspw. durch Bolzen gleicher Länge miteinander verbunden, so daß die Verschlußteile problemlos zwischen diesen Teilen angeordnet werden können. Die Abmessung der Blechteile ist dabei vorzugsweise so ausgestaltet, daß die Verschlußteile während des gesamten Bewegungsablaufs zwischen der Öffnungslage und der Schließlage des Fanghakens nicht über die Kontur der Blechteile hinausragen.

Die Verwendung der Blechteile erlaubt es, daß Gewicht des Verschlusses in ergänzender Weise zu reduzieren, ohne daß die Stabilität des Verschlusses beeinflußt wird. Die Blechteile weisen zudem den Vorteil auf, daß sie die besonders einfache Einbringung der als Langlöcher bzw. als angepaßten Langlöcher ausgebildeten Kulissen zur Ausbildung der Führung für das zweite Ende des Antriebshebels und den Fanghaken ermöglichen.

Der Antrieb des Verschlusses kann, wie bereits Eingangs dargestellt, mit beliebigen Antriebseinheiten realisiert werden, die im Falle eines Ausfalls ebenfalls mit einer entsprechenden Notbetätigungsvorrichtung versehen werden können. Nach einer vorteilhaften Weiterbildung der Erfindung ist der Steuerungshebel drehfest mit einem die ortsfeste Drehachse bildenden Lagerbolzen verbunden und ist mindestens ein freies Ende des Lagerbolzens zum Anschluß an einen Handhebel ausgebildet.

Diese Besonderheit des Verschlusses ermöglicht es, bei einem Ausfall der Antriebseinheit den Verschluß manuell unter Verwendung eines Handhebels zwischen der Öffnungslage und der Schließlage zu bewegen. Die Anordnung einer manuellen Betätigungsmöglichkeit direkt am Verschluß gewährleistet dabei, daß bei der Auswahl des Antriebs in jedem Fall ein manuelles Öffnen oder Schließen des Verschlusses möglich ist, auch wenn eine Beschädigung der Antriebseinheit von solchem Ausmaße ist, daß selbst eine manuelle Betätigung der Antriebseinheit nicht mehr möglich ist. Besonders vorteilhaft ist dabei die Verwendung eines Innensechskants als Werkzeugaufnahmeöffnung, mit der unter Verwendung eines entsprechend ausgebildeten Handhebels eine zuverlässige Betätigung des Verschlusses möglich ist.

Eine Lagesicherung des Fanghakens in der Schließstellung und/oder der Öffnungsstellung kann grundsätzlich über die Antriebseinheit, nämlich den Hydraulikzylinder, den elektrischen Antrieb, eine Selbsthemmung oder dergleichen realisiert werden. Zur Entlastung der Antriebe und um möglichen Beschädigungen vorzubeugen, werden bei bekannten Verschlüssen jedoch in der Regel Arretierungsvorrichtungen verwendet, welche bspw. unter Verwendung von federbelasteten Rastelementen den Fanghaken in der Schließstellung arretieren.

Nach einer vorteilhaften Weiterbildung der Erfindung sind zur Sicherung des Fanghakens in der Schließstellung jedoch der Verbindungshebel und der Antriebshebel derart an dem Steuerungshebel gelagert, daß der Fanghaken in der Schließstellung durch eine Übertotpunktlagerung gesichert ist.

Diese Weiterbildung der Erfindung erlaubt es, vollständig auf zusätzliche Rastelemente zu verzichten. Gegenüber bekannten Rastierungen weist der entsprechend weitergebildete Verschluß den Vorteil auf, daß keine federbelasteten Bauteile aufeinander abreiben, was zu einem Verschleiß führt und mit einer erheblichen Geräuschbelastung verbunden ist. Zudem finden beim Öffnen keine Aushebelvorgänge statt, die bei bekannten Verschlüssen nur mit einem erhöhten Kraftaufwand und einem daraus resultierenden erhöhten Verschleiß erfolgen.

Nach einer weiteren Ausgestaltung der Erfindung sind der Antriebshebel, der Steuerungshebel und der Verbindungshebel derart miteinander verbunden, daß eine Schließkraft beim Übergang von der Öffnungslage in die Schließlage zunimmt. Dies wird vorzugsweise dadurch erreicht, daß der Antriebshebel, der Steuerungshebel und der Verbindungshebel gemeinsam einen Kniehebel bilden.

Diese Weiterbildung der Erfindung gewährleistet besonders zuverlässig, daß trotz einer zunehmenden Gegenkraft, insbesondere bei der Schließung eines Cabriolet-Verdecks, dieses zuverlässig bis in die Schließstellung bewegt wird, ohne daß es zu Störungen kommt.

Die Öffnungslage und die Schließlage des Fanhakens können durch die Längserstreckung der Langlöcher und der darin gelagerten Schließbauteile, nämlich den Antriebshebel und den Fanghaken bestimmt werden. Nach einer vorteilhaften Ausgestaltung der Erfindung weisen der Antriebshebel und/oder der Verbindungshebel zur Bildung einer die Öffnungslage und die Schließlage bestimmenden Endstellung jedoch eine korrespondierend zum Lagerbolzen als Vertiefung ausgebildete Anlagefläche auf.

Aufgrund dieser Besonderheit des Schlosses gemäß dieser Weiterbildung der Erfindung ist das Gehäuse entlastet, da sich die Öffnungslage und die Schließlage allein durch die Schließbauteile bestimmt, die bereits zur Kraftübertragung entsprechend dimensioniert sind. Somit kann die Zuverlässigkeit des Verschlusses in ergänzender Weise gesteigert werden und Beschädigungen werden wirksam vermieden.

Nachstehend wird ein Ausführungsbeispiel der Erfindung anhand der Zeichnungen beschrieben. In den Zeichnungen zeigen:
- Fig. 1: eine perspektivische Ansicht des Verschlusses mit einer daran angeordneten Antriebseinheit;
- Fig. 2: eine weitere perspektivische Ansicht des Verschlusses von Fig. 1 ohne Darstellung eines Seitenbleches im Eingriff mit einem Verschlußzapfen;
- Fig. 3a: eine perspektivische Ansicht des Verschlusses von Fig. 1 in einer Öffnungslage;
- Fig. 3b: eine perspektivische Ansicht des Verschlusses von Fig. 1 in einer Schließlage;
- Fig. 3c: eine perspektivische Darstellung des Verschlusses von Fig. 3a mit nur einem Seitenblech zur besseren Darstellung;
- Fig. 4a: eine Seitenansicht des Verschlusses von Fig. 1 in der Öffnungslage;
- Fig. 4b: eine Seitenansicht des Verschlusses von Fig. 1 ohne Seitenblech in der Öffnungslage und
- Fig. 4c: eine Seitenansicht des Verschlusses von Fig. 1 ohne Seitenblech in der Schließlage.

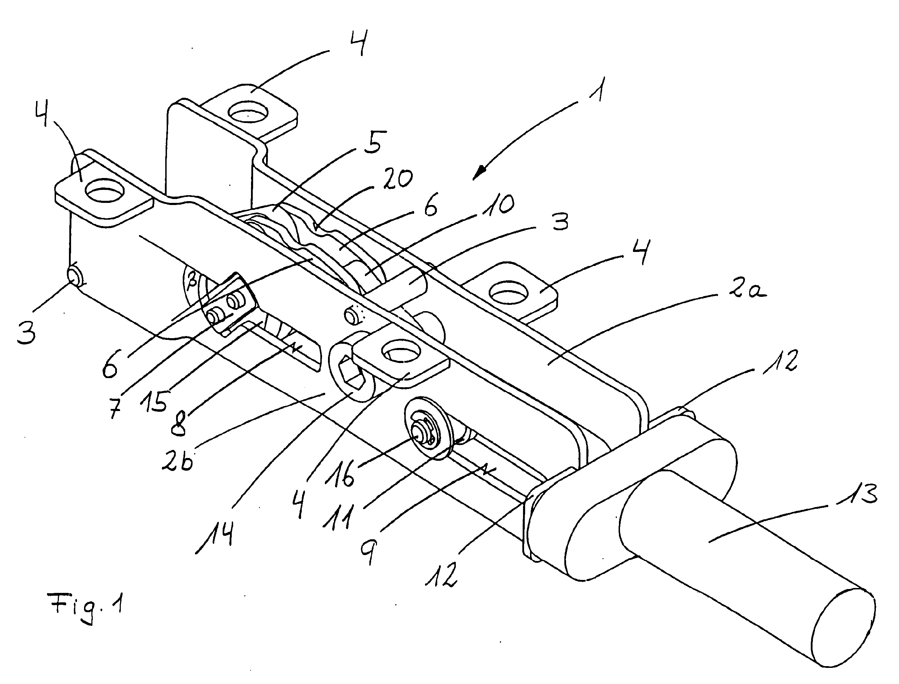

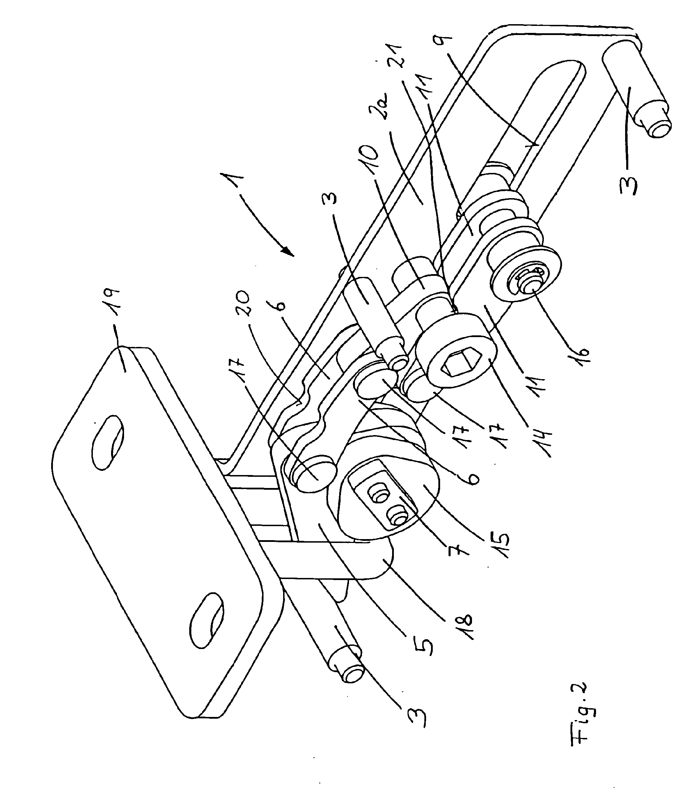

Der in den Fig. 1-4c wiedergegebene Verschluß 1 besteht aus einem Gehäuse, das aus sich gegenüberliegenden Blechscheiben 2a, 2b gebildet ist, die mit Hilfe von vernieteten Distanzbolzen 3 zu einer Einheit zusammengefügt sind.

In dem Gehäuse ist ein Lagerbolzen 14 an den Seitenblechen 2a, 2b gelagert, auf dem ein im wesentlichen dreiecksförmiger Steuerungshebel 10 in einem Eckpunkt drehfest gelagert ist. An den freien Eckpunkten des Steuerungshebels 10 angeordnete Bolzen 17 dienen zur schwenkbaren Verbindung mit einem ersten Ende eines Antriebshebels 11 einerseits und einem Ende eines Verbindungshebels 6 andererseits.

An dem den Steuerungshebel 10 gegenüberliegenden zweiten Ende weist der Antriebshebel 11 einen Lagerstift 16 auf, dessen freie Enden jeweils in in den Seitenblechen 2a, 2b angeordneten Langlöchern 9 linear verschiebbar gelagert sind.

Der Verbindungshebel 6 ist mit seinem dem Steuerungshebel 10 gegenüberliegenden Ende mittels eines Bolzens 17 verschwenkbar im hinteren Bereich eines Fanghakens 5 mit diesem verbunden. Der Verbindungshebel 6 und der Antriebshebel 11 weisen an ihren mit dem Lagerbolzen 14 in Eingriff bringbaren Seiten jeweils eine teilkreisförmige Vertiefung 20, 21 auf, deren Radien im wesentlichen dem Radius des Lagerbolzens 14 entsprechen.

Der Fanghaken 5 weist beiderseits angeordnete Adapterstücke 15 auf, an denen jeweils ein Kulissenstein 7 derart angeordnet ist, daß sie sich mit einem speziell ausgeformten zweiten Langloch 8 in den Blechteilen 2a, 2b in Eingriff befinden. Das Langloch 8 weist in einem dem ersten Langloch 9 zugewandten Bereich eine rechteckige Form auf, deren Höhe im wesentlichen der Höhe der Kulissensteine 7 entspricht, so daß der Fanghaken 5 in dem Bereich, in dem sich die Kulissensteine 7 mit dem rechteckigen Bereich des Langlochs 8 in Eingriff befinden, lediglich eine Linearbewegung ausführen kann.

An seinem dem ersten Langloch 9 abgewandten Ende ist das Langloch 8 nach oben und unten hin ausgeweitet, so daß sich die Kulissensteine 7 nach Erreichen des Endes des Langlochs 8 um einen Winkel β drehen können, wodurch auch der Fanghaken 5 eine Drehung um den Winkel β vollführt.

An seinem hinteren Ende im Bereich des Lagerstifts 16 und der ersten Führung 9 ist zum Antrieb des Verschlusses 1 ein hydraulischer Antrieb 13 über an den Blechteilen 2a, 2b angeordnete Anschlußflansche 12 an dem Verschluß befestigt. Der hydraulische Antrieb 13 weist einen hier nicht dargestellten Hydraulikzylinder auf, der zum Antrieb des Verschlusses 1 mit dem Antriebshebel 11 im Bereich des Lagerstifts 16 verbunden ist.

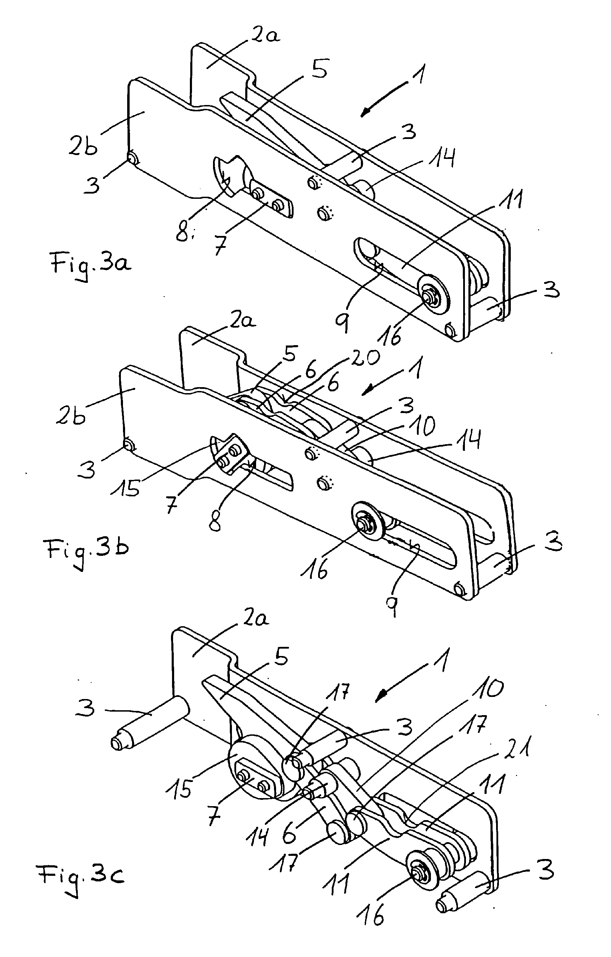

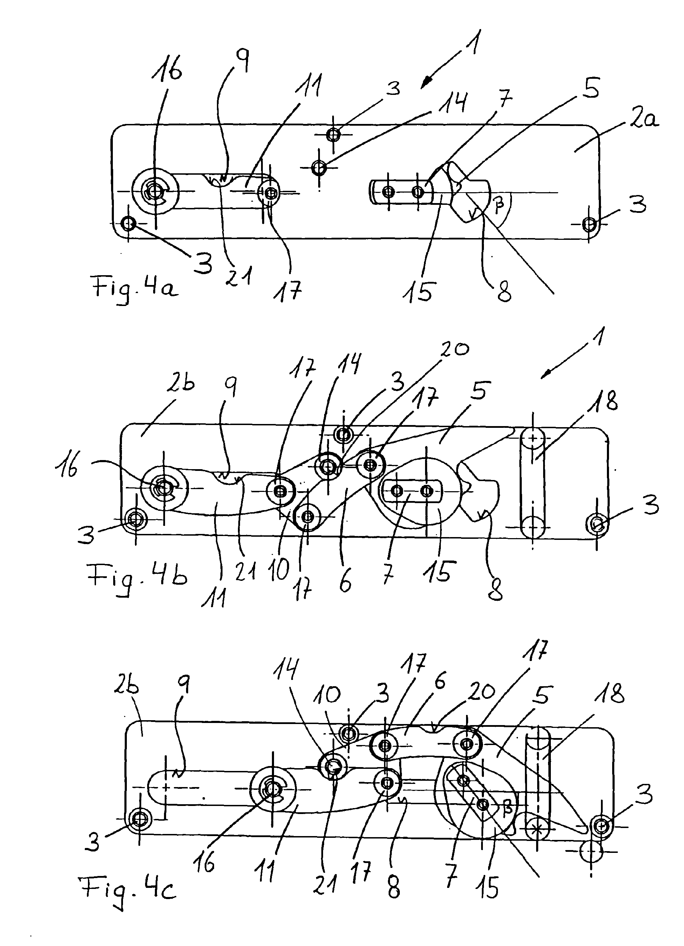

Durch ein Herausschieben des Hydraulikzylinders wird das dem Steuerungshebel 10 gegenüberliegende zweite Ende des Antriebshebels 11 in Richtung auf den Fanghaken 5 verschoben, wobei das zweite Ende des Steuerungshebels 10 durch den Lagerstift 16 in dem Langloch 9 geführt ist. Während dieser Bewegung des Antriebshebels 11, überträgt dieser die Antriebskraft über den Steuerungshebel 10, und den Verbindungshebel 6 auf den Fanghaken 5, der sich aus der in den Fig. 3a, 3c, 4a und 4b dargestellten Öffnungslage in die in den Fig. 1, 2, 3b und 4c dargestellten Schließlage bewegt. Die Öffnungslage ist dann erreicht, wenn der Lagerbolzen 14 in der Vertiefung 20 an dem Verbindungshebel 6 zur Anlage kommt. Die Schließlage ist dann erreicht, wenn der Lagerbolzen 14 in der Vertiefung 21 des Antriebshebels 11 zur Anlage kommt.

Während des Bewegungsablaufs aus der Öffnungslage in die Schließlage vollzieht der Fanghaken 5 zuerst eine lineare Bewegung in Richtung auf einen Verschlußzapfen 18 und anschließend eine Drehbewegung, bei der der Verschlußzapfen 18 weiter niedergedrückt wird. Aufgrund der schräg zum Verschlußzapfen 18 ausgerichteten Öffnungsfläche des Fanghakens 5 wird der Verschlußzapfen 18 bereits bei der Linearbewegung des Fanghakens 5 in vorbestimmten Maße heruntergedrückt, so daß sich der Zuziehweg aus der Bewegung des Anschlußzapfens 18 während der Linearbewegung und der Drehbewegung des Fanghakens 5 zusammensetzt.

Der Lagerbolzen 14 weist an seinem dem Blechteil 2b angeordneten Ende einen von außen zugänglichen Innensechkant auf, der zur Aufnahme eines hier nicht dargestellten Handhebels ausgebildet ist. Im Falle eines Ausfalls des Antriebselements 13 kann der Steuerungshebel 10, der drehfest an dem Lagerbolzen 14 angeordnet ist mittels des Handhebels verdreht werden, so daß der Fanghaken 5 manuell zwischen der Öffnungslage und der Schließlage verschwenkt werden kann.

Zur Anordnung an einem Verdeck oder einer Klappe weisen die Blechteile 2a, 2b rechtwinklig angeordnete Anschraublaschen 4 auf.

## Patentansprüche

1. Verschluß für Verdecke, Klappen oder dergleichen an Fahrzeugen mit
- einem zwischen einer Öffnungslage und einer Schließlage bewegbaren, schwenkbar gelagerten Fanghaken,
- einem einerseits an dem Fanghaken und andererseits an dem Steuerungshebel schwenkbar gelagerten Verbindungshebel, wobei
- an dem um eine am Verschluß ortsfeste Drehachse gelagerten Steuerungshebel zusätzlich ein erstes Ende eines Antriebshebels schwenkbar gelagert ist, wobei
- das dem ersten Ende gegenüberliegende zweite Ende des Antriebshebels in einer ersten, am Verschluß angeordneten Führung linear verschiebbar gelagert ist,
**dadurch gekennzeichnet**, **da**ß
der Fanghaken (5) an einer zweiten Führung (8) gelagert ist, die derart ausgebildet ist, daß der Fanghaken (5) beim Übergang von der Öffnungslage in die Schließlage im Anschluß an eine lineare Bewegung eine Drehbewegung vollzieht.

2. Verschluß nach Anspruch 1, **dadurch gekennzeichnet, daß** das zweite Ende des Antriebhebels (11) mit einer Antriebseinheit (13), insbesondere einem Hydraulikzylinder eines hydraulischen Antriebs verbunden ist.

3. Verschluß nach Anspruch 1 oder 2, **dadurch gekennzeichnet, daß** alle Verschlußteile in einem Gehäuse untergebracht sind.

4. Verschluß nach einem oder mehreren der vorhergehenden Ansprüche, **dadurch gekennzeichnet, daß** die Führungen durch an dem Gehäuse angeordnete Kulissen (8, 9), insbesondere angepaßte Langlöcher gebildet sind.

5. Verschluß nach einem oder mehreren der vorhergehenden Ansprüche, **dadurch gekennzeichnet, daß** das Gehäuse aus zwei im Abstand voneinander angeordneten, miteinander verbundenen Blechteilen (2a, 2b) gebildet ist, an denen der Fanghaken (5) und das zweite Ende des Antriebhebels (11) verschiebbar gelagert sind.

6. Verschluß nach einem oder mehreren der vorhergehenden Ansprüche, **dadurch gekennzeichnet, daß** der Steuerungshebel (10) drehfest mit einem die ortsfeste Drehachse bildenden Lagerbolzen (14) verbunden ist, und daß mindestens ein freies Ende des Lagerbolzens (14) zum Anschluß an einen Handhebel ausgebildet ist.

7. Verschluß nach einem oder mehreren der vorhergehenden Ansprüche, **dadurch gekennzeichnet, daß** der Verbindungshebel (6) und der Antriebshebel (11) derart an dem Steuerungshebel (10) gelagert sind, daß der Fanghaken (5) in der Schließstellung durch eine Übertotpunktlager gesichert ist.

8. Verschluß nach einem oder mehreren der vorhergehenden Ansprüche, **dadurch gekennzeichnet, daß** der Antriebshebel (11), der Steuerungshebel (10) und der Verbindungshebel (6) derart miteinander verbunden sind, daß eine Schließkraft beim Übergang von der Öffnunglage in die Schließlage zunimmt.

9. Verschluß nach einem oder mehreren der vorhergehenden Ansprüche, **dadurch gekennzeichnet, daß** der Antriebshebel (11) und/oder der Verbindungshebel (6) zur Bildung einer die Öffnungslage und die Schließlage bestimmenden Endstellung eine korrespondierend zum Lagerbolzen (17) als Vertiefung (20, 21) ausgebildete Anlageflächen aufweisen.
